# EUROPEAN PATENT SPECIFICATION

(11) **EP 3 877 255 B1**
(45) Date of publication and mention of the grant of the patent: **10.07.2024**
(21) Application number: 19805491.8
(22) Date of filing: 29.10.2019
(51) Int. Cl.: B64C 11/32, B64C 11/20, B64C 39/02, B64C 11/34, B64U 10/13, B64U 30/20, B64U 30/296, B64U 50/19

(54) **PASSIVE VARIABLE PITCH PROPELLERS**
PASSIVE VERSTELLPROPELLER
HÉLICES À PAS VARIABLE PASSIVES

(30) Priority: 05.11.2018 US 201816180399
(43) Date of publication of application: 15.09.2021
(73) Proprietor: Amazon Technologies Inc., Seattle, Washington 98108-1226 (US)
(72) Inventor: LEGRAND, Louis, Seattle, Washington 98109-5210 (US); BRODIE, John, Seattle, Washington 98109-5210 (US); KIMCHI, Gur, Seattle, Washington 98109-5210 (US)
(74) Representative: D Young & Co LLP
(86) International application number: PCT/US2019/058654
(87) International publication number: WO 2020/096819

(56) References cited:
- US-A- 2 536 041
- US-A1- 2017 355 447
- US-A1- 2018 029 694
- US-B1- 8 790 081

## Description

### TECHNICAL FIELD

The present disclosure relates to a propeller and an aerial vehicle comprising the propeller.

### BACKGROUND

Unmanned vehicles, such as unmanned aerial vehicles ("UAV"), ground and water based automated vehicles, are continuing to increase in use. For example, UAVs are often used by hobbyists to obtain aerial images of buildings, landscapes, etc. While there are many beneficial uses of these vehicles, balancing the tightly coupled vehicle performance parameters of stability, maneuverability, and energy efficiency introduces design complexities of the UAVs. For example, for UAVs that transition between VTOL (vertical takeoff and landing) flight configurations and horizontal flight configurations, the propellers for such UAVs may generally be designed for efficiency in only one of the flight configurations. In this regard, some UAVs may utilize active propeller pitch control systems and mechanisms to try to improve the efficiency of propellers in one or both flight configurations. However, such active propeller pitch control systems and mechanisms may add cost, weight, and complexity to the UAVs. Accordingly, there is a need for systems and methods to improve propeller efficiency in multiple flight configurations without adding cost, weight, and complexity.

US2018029694 A1 discloses a propeller including a blade free to rotate about a longitudinal axis of the blade. The blade rotates to a first position against a mechanical stop when the propeller is rotated at a first rotational speed and rotates to a second position against a magnetic stop when the propeller is rotated at a second rotational speed.
US2017355447 A1 discloses an offset blade of a propeller that varies the blade pitch according to in-flight conditions.
US8790081 B1 discloses a set of propeller blades and a mechanism coupled to the propeller blades configured for affecting propeller pitch.
US2436041 A discloses a propelling airscrew with pivotable blades adapted to be automatically adjusted in pitch.

### SUMMARY OF INVENTION

The subject matter for which protection is sought is defined by the independent claim.

Further preferred embodiments are defined in the dependent claims.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1A illustrates a perspective view of an example aerial vehicle in a VTOL (vertical takeoff and landing) flight configuration, in accordance with disclosed implementations.
FIG. 1B illustrates a perspective view of an example aerial vehicle in a horizontal flight configuration, in accordance with disclosed implementations.
FIG. 2 illustrates a perspective view of an example aerial vehicle with a substantially hexagonal shaped ring wing, in accordance with disclosed implementations.
FIG. 3 illustrates a partial perspective view of a propeller which is not covered by the appended claims, including a propeller hub and propeller blades that are passively movably coupled thereto via respective hinges, in accordance with disclosed implementations.
FIGs. 4A-4C illustrate perspective, side, and end views, respectively, of propeller blades that are passively movably coupled to a propeller hub via hinges or flexible joints in a VTOL flight configuration, in accordance with disclosed implementations.
FIGs. 5A-5C illustrate perspective, side, and end views, respectively, of propeller blades that are passively movably coupled to a propeller hub via hinges or flexible joints in a horizontal flight configuration, in accordance with disclosed implementations.
FIGs. 6A-6C illustrate perspective, side, and end views, respectively, of propeller blades that are passively movably coupled to a propeller hub via torsionally flexible joints, in accordance with disclosed implementations.
FIGs. 7A and 7B illustrate various views of propeller blades having tip weights, in accordance with disclosed implementations.
FIG. 8 is a block diagram illustrating various components of an example aerial vehicle control system, in accordance with disclosed implementations.

### DETAILED DESCRIPTION

Systems and methods for providing passive variable pitch propellers for UAVs are described. Based at least in part on the required thrust, advance ratio, and/or current flight configuration, a propeller rotated by a motor coupled to a UAV may passively alter one or more aspects related to the geometry of the propeller, such as coning angle and/or pitch, such that the propeller may operate with improved efficiency in two or more flight configurations.

A UAV may include a plurality of propellers rotated by respective motors. In a VTOL flight configuration, e.g., in which the UAV is hovering above ground, the required thrust may be relatively high, and the advance ratio may be relatively low. As a result, a passively movable propeller may alter its geometry to operate with a relatively large coning angle and a relatively small pitch when the UAV is in the VTOL flight configuration. Likewise, in a horizontal flight configuration, e.g., in which the UAV is cruising substantially parallel to ground, the required thrust may be relatively low, and the advance ratio may be relatively high. As a result, a passively movable propeller may alter its geometry to operate with a relatively small coning angle and a relatively large pitch when the UAV is in the horizontal flight configuration.

A passively movable propeller may be formed in various manners. An example not falling under the scope of the appended claims, is a passively movable propeller which may include one or more propeller blades having respective hinges along their lengths and/or that are coupled to a propeller hub via respective hinges. In addition, each hinge may be angled relative to a chord of the propeller blade, such that a coning angle of the propeller blade is inversely related to a pitch of the propeller blade. That is, as the coning angle of the propeller blade increases, the pitch of the propeller blade may decrease, and vice versa.

A passively movable propeller in accordance with claim 1, includes one or more propeller blades having respective flexible joints along their lengths and/or that are coupled to a propeller hub via respective flexible joints. In addition, each flexible joint may be angled relative to a chord of the propeller blade, such that a coning angle of the propeller blade is inversely related to a pitch of the propeller blade. That is, as the coning angle of the propeller blade increases, the pitch of the propeller blade may decrease, and vice versa.

A passively movable propeller may include one or more propeller blades having respective torsionally flexible joints along their lengths and/or that are coupled to a propeller hub via respective torsionally flexible joints. In addition, each torsionally flexible joint may be configured to rotate around an axis substantially parallel to a span or length of the propeller blade, such that a coning angle of the propeller blade is inversely related to a pitch of the propeller blade. That is, as the coning angle of the propeller blade increases, the pitch of the propeller blade may decrease, and vice versa.

One or more tip weights may be included in a passively movable propeller, and the tip weights may affect or modify one or more aspects related to the geometry, such as coning angles, of the propeller blades based at least in part on the required thrust, advance ratio, and/or current flight configuration.

In this manner, one or more propellers of a UAV may comprise one or more passively movable propeller blades that can improve the efficiency of operation of the UAV in one or more flight configurations. For example, by passively altering a coning angle and/or a pitch of one or more propeller blades, operation of one or more propellers of a UAV may be designed or configured for improved efficiency in VTOL flight configuration, horizontal flight configuration, and/or other flight configurations, without the added cost, weight, and complexity associated with active propeller pitch control systems and mechanisms.

As used herein, a "materials handling facility" may include, but is not limited to, warehouses, distribution centers, cross-docking facilities, order fulfillment facilities, packaging facilities, shipping facilities, rental facilities, libraries, retail stores, wholesale stores, museums, or other facilities or combinations of facilities for performing one or more functions of materials (inventory) handling. A "delivery location," as used herein, refers to any location at which one or more inventory items (also referred to herein as a payload) may be delivered. For example, the delivery location may be a person's residence, a place of business, a location within a materials handling facility (e.g., packing station, inventory storage), or any location where a user or inventory is located, etc. Inventory or items may be any physical goods that can be transported using an aerial vehicle. For example, an item carried by a payload of an aerial vehicle discussed herein may be ordered by a customer of an electronic commerce website and aerially delivered by the aerial vehicle to a delivery location.

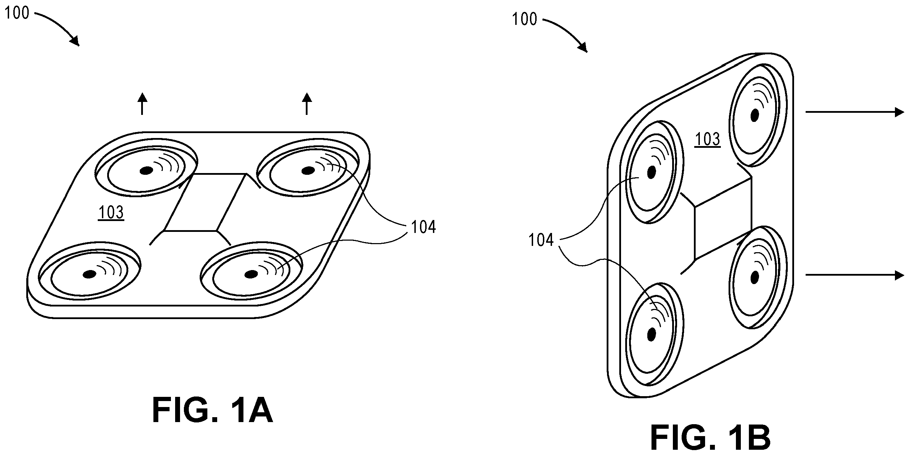

FIG. 1A illustrates a perspective view of an example aerial vehicle 100 in a VTOL (vertical takeoff and landing) flight configuration, in accordance with disclosed implementations.

As shown in FIG. 1A, the example aerial vehicle 100 includes a frame 103 and a plurality of propulsion mechanisms, such as propellers 104 coupled to and rotated by respective motors. By operation of the propellers 104, the example aerial vehicle 100 may operate in the VTOL flight configuration, e.g., substantially hovering above ground, or ascending or descending relative to ground.

The propellers 104 of the example aerial vehicle 100 may include one or more passively movable propeller blades. As further described herein, the passively movable propeller blades are coupled to respective propeller hubs via respective hinges, flexible joints, and/or torsionally flexible joints. Alternatively or in addition, the passively movable propeller blades include respective hinges, flexible joints, and/or torsionally flexible joints.

In the VTOL flight configuration as shown in FIG. 1A, the one or more passively movable propeller blades may adjust or modify their geometry and/or operational characteristics based at least in part on required thrust and/or advance ratio. For example, during hover flight in the VTOL flight configuration, the required thrust may be relatively high, and the advance ratio may be relatively low. As a result, the one or more passively movable propeller blades may adjust or modify their coning angles to be relatively larger, and may adjust or modify their pitches to be relatively smaller, thereby generating the relatively high required thrust at the relatively low advance ratio.

By adjusting or modifying geometry and/or operational characteristics of one or more passively movable propeller blades in this manner, the example aerial vehicle 100 may operate with improved efficiency in the VTOL flight configuration, e.g., as compared to aerial vehicles having fixed propeller blades, and/or aerial vehicles having active propeller pitch control systems and mechanisms.

FIG. 1B illustrates a perspective view of an example aerial vehicle 100 in a horizontal flight configuration, in accordance with disclosed implementations.

As shown in FIG. 1B, the example aerial vehicle 100 may include a frame 103 and a plurality of propulsion mechanisms, such as propellers 104 coupled to and rotated by respective motors. By operation of the propellers 104, the example aerial vehicle 100 may operate in the horizontal flight configuration, e.g., traveling substantially parallel to ground, or otherwise traversing across or relative to ground.

The propellers 104 of the example aerial vehicle 100 may include one or more passively movable propeller blades. As further described herein, the passively movable propeller blades may be coupled to respective propeller hubs via respective hinges, flexible joints, and/or torsionally flexible joints. Alternatively or in addition, the passively movable propeller blades may include respective hinges, flexible joints, and/or torsionally flexible joints.

In the horizontal flight configuration as shown in FIG. 1B, the one or more passively movable propeller blades may adjust or modify their geometry and/or operational characteristics based at least in part on required thrust and/or advance ratio. For example, during cruising flight in the horizontal flight configuration, the required thrust may be relatively low, and the advance ratio may be relatively high. As a result, the one or more passively movable propeller blades may adjust or modify their coning angles to be relatively smaller, and may adjust or modify their pitches to be relatively larger, thereby generating the relatively low required thrust at the relatively high advance ratio.

By adjusting or modifying geometry and/or operational characteristics of one or more passively movable propeller blades in this manner, the example aerial vehicle 100 may operate with improved efficiency in the horizontal flight configuration, e.g., as compared to aerial vehicles having fixed propeller blades, and/or aerial vehicles having active propeller pitch control systems and mechanisms.

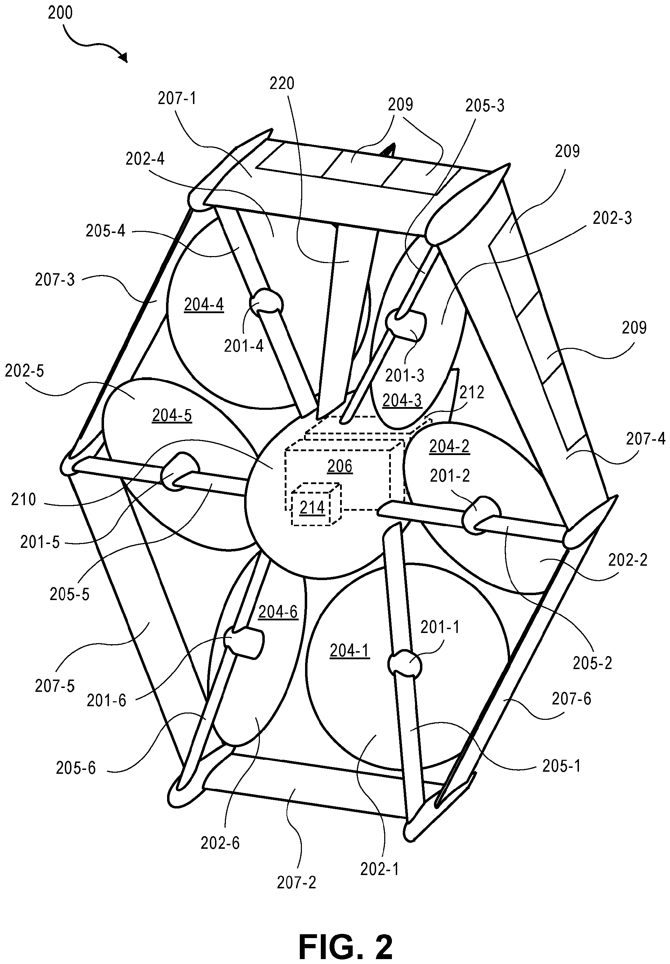

FIG. 2 illustrates a perspective view of an example aerial vehicle 200 with a substantially hexagonal shaped ring wing 207 that surrounds a plurality of propulsion mechanisms, in accordance with disclosed implementations. The aerial vehicle 200 includes six propulsion mechanisms 202-1, 202-2, 202-3, 202-4, 202-5, and 202-6 spaced about the fuselage 210 of the aerial vehicle 200. As discussed herein, while the propulsion mechanisms 202 may include motors 201-1, 201-2, 201-3, 201-4, 201-5, and 201-6 and propellers 204-1, 204-2, 204-3, 204-4, 204-5, and 204-6, in other implementations, other forms of propulsion may be utilized as the propulsion mechanisms 202. For example, one or more of the propulsion mechanisms 202 of the aerial vehicle 200 may utilize fans, jets, turbojets, turbo fans, jet engines, and/or the like to maneuver the aerial vehicle. Generally described, a propulsion mechanism 202, as used herein, includes any form of propulsion mechanism that is capable of generating a force sufficient to maneuver the aerial vehicle, alone and/or in combination with other propulsion mechanisms. Furthermore, in selected implementations, propulsion mechanisms (e.g., 202-1, 202-2, 202-3, 202-4, 202-5, and 202-6) may be configured such that their individual orientations may be dynamically modified (e.g., change from vertical to horizontal flight orientation or any position therebetween).

Likewise, while the examples herein describe the propulsion mechanisms being able to generate force in either direction, in some implementations, the propulsion mechanisms may only generate force in a single direction. However, the orientation of the propulsion mechanisms may be adjusted so that the force can be oriented in a positive direction, a negative direction, and/or any other direction.

In this implementation, the aerial vehicle 200 also includes a ring wing 207 having a substantially hexagonal shape that extends around and forms the perimeter of the aerial vehicle 200. In the illustrated example, the ring wing has six sections or segments 207-1, 207-2, 207-3, 207-4, 27-5, and 207-6 that are joined at adjacent ends to form the ring wing 207 around the aerial vehicle 200. Each segment of the ring wing 207 has an airfoil shape to produce lift when the aerial vehicle is oriented as illustrated in FIG. 2 and moving in a direction that is substantially horizontal. As illustrated, and discussed further below, the ring wing is positioned at an angle with respect to the fuselage 210 such that the lower segment 207-2 of the ring wing acts as a front wing as it is toward the front of the aerial vehicle when oriented as shown and moving in a horizontal direction. The upper segment 207-1 of the ring wing, which has a longer chord length than the lower segment 207-2 of the ring wing 207, is farther back and thus acts as a rear wing.

The ring wing 207 is secured to the fuselage 210 by motor arms 205. In this example, all six motor arms 205-1, 205-2, 205-3, 205-4, 205-5, and 205-6 may be coupled to the fuselage at one end, extend from the fuselage 210 and couple to the ring wing 207 at a second end, thereby securing the ring wing 207 to the fuselage 210. In other implementations, less than all of the motor arms may extend from the fuselage 210 and couple to the ring wing 207. For example, motor arms 205-2 and 205-5 may be coupled to the fuselage 210 at one end and extend outward from the fuselage but not couple to the ring wing 207.

In some implementations, the aerial vehicle may also include one or more stabilizer fins 220 that extend from the fuselage 210 to the ring wing 207. The stabilizer fin 220 may also have an airfoil shape. In the illustrated example, the stabilizer fin 220 extends vertically from the fuselage 210 to the ring wing 207. In other implementations, the stabilizer fin may be at other positions. For example, the stabilizer fin may extend downward from the fuselage between motor arm 205-1 and motor arm 205-6.

In general, one or more stabilizer fins may extend from the fuselage 210, between any two motor arms 205 and couple to an interior of the ring wing 207. For example, stabilizer fin 220 may extend upward between motor arms 205-3 and 205-4, a second stabilizer fin may extend from the fuselage and between motor arms 205-5 and 205-6, and a third stabilizer fin may extend from the fuselage and between motor arms 205-1 and 205-2.

Likewise, while the illustrated example shows the stabilizer fin extending from the fuselage 210 at one end and coupling to the interior of the ring wing 207 at a second end, in other implementations, one or more of the stabilizer fin(s) may extend from the fuselage and not couple to the ring wing or may extend from the ring wing and not couple to the fuselage. In some implementations, one or more stabilizer fins may extend from the exterior of the ring wing 207, one or more stabilizer fins may extend from the interior of the ring wing 207, one or more stabilizer fins may extend from the fuselage 210, and/or one or more stabilizer fins may extend from the fuselage 210 and couple to the interior of the ring wing 207.

The fuselage 210, motor arms 205, stabilizer fin 220, and ring wing 207 of the aerial vehicle 200 may be formed of any one or more suitable materials, such as graphite, carbon fiber, plastics, metals, aluminum, steel, other materials, or combinations thereof.

Each of the propulsion mechanisms 202 are coupled to a respective motor arm 205 (or propulsion mechanism arm) such that the propulsion mechanism 202 is substantially contained within the perimeter of the ring wing 207. For example, propulsion mechanism 202-1 is coupled to motor arm 205-1, propulsion mechanism 202-2 is coupled to motor arm 205-2, propulsion mechanism 202-3 is coupled to motor arm 205-3, propulsion mechanism 202-4 is coupled to motor arm 205-4, propulsion mechanism 202-5 is coupled to motor arm 205-5, and propulsion mechanism 202-6 is coupled to motor arm 205-6. In the illustrated example, each propulsion mechanism 202-1, 202-2, 202-3, 202-4, 202-5, and 202-6 is coupled at an approximate mid-point of the respective motor arm 205-1, 205-2, 205-3, 205-4, 205-5, and 205-6 between the fuselage 210 and the ring wing 207. Some propulsion mechanisms 202 may be coupled toward an end of the respective motor arm 205. In other implementations, the propulsion mechanisms may be coupled at other locations along the motor arm. Likewise, in some implementations, some of the propulsion mechanisms may be coupled to a mid-point of the motor arm and some of the propulsion mechanisms may be coupled at other locations along respective motor arms (e.g., closer toward the fuselage 210 or closer toward the ring wing 207).

As illustrated, the propulsion mechanisms 202 may be oriented at different angles with respect to each other. For example, propulsion mechanisms 202-2 and 202-5 are aligned with the fuselage 210 such that the force generated by each of propulsion mechanisms 202-2 and 202-5 is in-line or in the same direction or orientation as the fuselage. In the illustrated example, the aerial vehicle 200 is oriented for horizontal flight such that the fuselage is oriented horizontally in the direction of travel. In such an orientation, the propulsion mechanisms 202-2 and 202-5 provide horizontal forces, also referred to herein as thrusting forces and act as thrusting propulsion mechanisms.

In comparison to propulsion mechanisms 202-2 and 202-5, each of propulsion mechanisms 202-1, 202-3, 202-4, and 202-6 are offset or angled with respect to the orientation of the fuselage 210. When the aerial vehicle 200 is oriented horizontally as shown in FIG. 2 for horizontal flight, the propulsion mechanisms 202-1, 202-3, 202-4, and 202-6 may be used as propulsion mechanisms, providing thrust in a non-horizontal direction to cause the aerial vehicle to pitch, yaw, roll, heave and/or sway. In other implementations, during horizontal flight, the propulsion mechanisms 202-1, 202-3, 202-4, and 202-6 may be disabled such that they do not produce any forces and the aerial vehicle 200 may be propelled aerially in a horizontal direction as a result of the lifting force from the aerodynamic shape of the ring wing 207 and the horizontal thrust produced by the thrusting propulsion mechanisms 202-2 and 202-5. In some implementations, the propulsion mechanisms that are not aligned to produce substantially horizontal forces may be allowed to freely rotate in the wind and energy produced from the rotation may be used to charge a power module of the aerial vehicle 200.

In some implementations, one or more segments of the ring wing 207 may include ailerons, control surfaces, and/or trim tabs 209 that may be adjusted to control the aerial flight of the aerial vehicle 200. For example, one or more ailerons, control surfaces, and/or trim tabs 209 may be included on the upper segment 207-1 of the ring wing 207 and/or one or more ailerons, control surfaces, and/or trim tabs 209 may be included on the side segments 207-4 and/or 207-3. Further, one or more ailerons, control surfaces, and/or trim tabs 209 may also be included on one or more of the remaining segments 207-2, 207-5, and 207-6. The ailerons, control surfaces, and/or trim tabs 209 may be operable to control the pitch, yaw, and/or roll of the aerial vehicle during horizontal flight when the aerial vehicle 200 is oriented as illustrated in FIG. 2.

The angle of orientation of each of the propulsion mechanisms 202-1, 202-2, 202-3, 202-4, 202-5, and 202-6 may vary for different implementations. Likewise, in some implementations, the offset of the propulsion mechanisms 202-1, 202-2, 202-3, 202-4, 202-5, and 202-6 may each be the same, with some oriented in one direction and some oriented in another direction, may each be oriented different amounts, and/or in different directions.

In the illustrated example of FIG. 2, each propulsion mechanism 202-1, 202-2, 202-3, 202-4, 202-5, and 202-6 may be oriented approximately thirty degrees with respect to the position of each respective motor arm 205-1, 205-2, 205-3, 205-4, 205-5, and 205-6. In addition, the direction of orientation of the propulsion mechanisms is such that pairs of propulsion mechanisms are oriented toward one another. For example, propulsion mechanism 202-1 is oriented approximately thirty degrees toward propulsion mechanism 202-6. Likewise, propulsion mechanism 202-2 is oriented approximately thirty degrees in a second direction about the second motor arm 205-2 and oriented toward propulsion mechanism 202-3. Finally, propulsion mechanism 202-4 is oriented approximately thirty degrees in the first direction about the fourth motor arm 205-4 and toward propulsion 202-5. As illustrated, propulsion mechanisms 202-2 and 202-5, which are on opposing sides of the fuselage 210, are aligned and oriented in a same first direction (in this example, horizontal). Propulsion mechanisms 202-3 and 202-6, which are on opposing sides of the fuselage 210, are aligned and oriented in a same second direction, which is angled compared to the first direction. Propulsion mechanisms 202-1 and 202-4, which are on opposing sides of the fuselage 210, are aligned and oriented in a same third direction, which is angled compared to the first direction and the second direction.

When oriented for vertical takeoff and landing (VTOL) flight, the aerial vehicle may maneuver in any of the six degrees of freedom (pitch, yaw, roll, heave, surge, and sway), thereby enabling VTOL and high maneuverability. When the aerial vehicle is oriented for VTOL, the motor arms and the ring wing 207 are aligned approximately horizontally and in the same plane. In this orientation, each of the propulsion mechanisms are offset or angled with respect to the horizontal and/or vertical direction. As such, each propulsion mechanism 202, when generating a force, generates a force that includes both a horizontal component and a vertical component. In an example, each propulsion mechanism may be angled approximately thirty degrees with respect to vertical. Likewise, as discussed above, adjacent propulsion mechanisms are angled in opposing directions to form pairs of propulsion mechanisms. For example, propulsion mechanism 202-2 is oriented toward propulsion mechanism 202-3. As discussed further below, angling adjacent propulsion mechanisms toward one another to form pairs of propulsion mechanisms allows horizontal forces from each propulsion mechanism to cancel out such that the pair of propulsion mechanisms can produce a net vertical force. Likewise, if one of the propulsion mechanisms of a pair of propulsion mechanisms is producing a larger force than the other propulsion mechanism of the pair, a net horizontal force will result from the pair of propulsion mechanisms. Accordingly, when the aerial vehicle 200 is oriented for VTOL with angled propulsion mechanisms, the aerial vehicle can move independently in any of the six degrees of freedom. For example, if the aerial vehicle is to surge in the X direction, it can do so by altering the forces produced by the propulsion mechanisms to generate a net horizontal force in the X direction without having to pitch forward to enable a surge in the X direction.

To enable the fuselage to be oriented horizontally with an offset ring wing 207 during horizontal flight, as illustrated in FIG. 2, the fuselage is rotated at an angle when the aerial vehicle 200 is oriented for VTOL. In this example, the fuselage 210 is angled at approximately thirty degrees from vertical. In other implementations, the amount of rotation from vertical may be greater or less depending on the amount of offset desired for the ring wing 207 when the aerial vehicle 200 is oriented for horizontal flight.

The aerial vehicle may also include one or more landing gears that are extendable to a landing position in VTOL flight. During flight, the landing gear may be retracted into the interior of the ring wing 207 and/or may be rotated up and remain along the trailing edge of the ring wing. In still other examples, the landing gear may be permanently affixed.

The fuselage 210 may be used to house or store one or more components of the aerial vehicle, such as the aerial vehicle control system 214, a power module 206, and/or a payload 212 that is transported by the aerial vehicle. The aerial vehicle control system 214 is discussed further below. The power module(s) 206 may be removably mounted to the aerial vehicle 200. The power module(s) 206 for the aerial vehicle may be, for example, in the form of battery power, solar power, gas power, super capacitor, fuel cell, alternative power generation source, or a combination thereof. The power module(s) 206 are coupled to and provide power for the aerial vehicle control system 214, the propulsion mechanisms 202, and a payload engagement module to enable access to payload 212 within the fuselage 210.

In some implementations, one or more of the power modules 206 may be configured such that it can be autonomously removed and/or replaced with another power module. For example, when the aerial vehicle lands at a delivery location, relay location and/or materials handling facility, the aerial vehicle may engage with a charging member at the location that will recharge the power module.

The payload 212 may be any payload that is to be transported by the aerial vehicle. In some implementations, the aerial vehicle may be used to aerially deliver items ordered by customers for aerial delivery and the payload may include one or more customer ordered items. For example, a customer may order an item from an electronic commerce website and the item may be delivered to a customer specified delivery location using the aerial vehicle 200.

In some implementations, the fuselage 210 may include a payload engagement module (not shown). For example, the payload engagement module may be a hinged portion of the fuselage 210 that can rotate between an open position, in which the interior of the fuselage is accessible so that the payload 212 may be added to or removed from the fuselage, and a closed position so that the payload 212 is secured within the interior of the fuselage.

As illustrated in FIG. 2, the ring wing 207 is angled such that the lower segment 207-2 of the ring wing is positioned ahead of the upper segment 207-1 of the ring wing 207. The leading wing, lower segment 207-2 produces a much higher lift per square inch than the rear wing, upper segment 207-1, and the chord length of the lower segment 207-2 is less than the chord length of the upper segment 207-1. Likewise, as illustrated, the upper segment 207-1 of the ring wing has a different camber than the lower segment 207-2. The chord length and camber transition from that illustrated along the upper segment 207-1 to the lower segment 207-2. In implementations that include one or more stabilizer fins, such as stabilizer fin 220, the difference between the chord lengths of the lower segment 207-2 and the upper segment 207-1 may be less and/or the difference between the cambers of the lower segment 207-2 and the upper segment 207-1 may be less.

While the side segments, such as side segment 207-4 and segment 207-6 of the ring wing provide some lift, at the midpoint where side segments 207-4 and 207-6 meet, there is minimal lift produced by the ring wing 207. Because there is minimal lift produced at the midpoint, the segments may be tapered to reduce the overall weight of the aerial vehicle. In this example, the side segments, such as side segments 207-4 and 207-6, are tapered toward the mid-point but retain some dimension for structural integrity and to operate as a protective barrier around the propulsion mechanisms 202. While the illustrated example shows both side segments 207-4 and 207-6 tapering to a smaller end at the midpoint, in other implementations, the taper may be consistent from the larger top segment 207-1 to the smaller lower segment 207-2.

In addition to providing lift, the ring wing 207 provides a protective barrier or shroud that surrounds the propulsion mechanisms of the aerial vehicle 200. The protective barrier of the ring wing 207 increases the safety of the aerial vehicle. For example, if the aerial vehicle comes into contact with another object, there is a higher probability that the object will contact the ring wing, rather than a propulsion mechanism.

As discussed above, when the aerial vehicle is oriented for horizontal flight, as illustrated in FIG. 2, the fuselage 210 is oriented in the direction of travel, the ring wing 207 is oriented in the direction of travel such that it will produce a lifting force, and propulsion mechanisms 202-2 and 202-5, which are on opposing sides of the fuselage 210, are aligned to produce forces in the substantially horizontal direction to propel or thrust the aerial vehicle horizontally. The other propulsion mechanisms 202-1, 202-3, 202-4, and 202-6 are offset and may be disabled, used to produce maneuverability forces, and/or allowed to freely rotate and produce energy that is used to charge a power module of the aerial vehicle 200. By increasing the thrust produced by each of the propulsion mechanisms 202-2 and 202-5, the horizontal speed of the aerial vehicle increases. Likewise, the lifting force from the ring wing 207 also increases. In some implementations, one or more ailerons, such as those discussed above, may be included on the surface of the ring wing and used to control the aerial navigation of the aerial vehicle during horizontal flight. Likewise, one or more stabilizer fins 220 may be included to stabilize the aerial vehicle during horizontal flight.

In some implementations, the hexagonal shaped ring wing may decrease manufacturing costs, provide for more stable flight, and provide flatter surfaces upon which control elements, such as ailerons, may be included, in comparison to a ring wing having a substantially circular shape or various other shapes. Likewise, other components may be coupled to the surface of the ring wing. Other components may include, but are not limited to, sensors, imaging devices or elements, range finders, identifying markers, navigation components, such as global positioning satellite antennas, antennas, etc.

As discussed herein, to transition the aerial vehicle from a VTOL orientation to a horizontal flight orientation, as illustrated in FIG. 2, forces generated by each of the propulsion mechanisms 202 will cause the aerial vehicle to pitch forward and increase in speed in the horizontal direction. As the horizontal speed increases and the pitch increases, the lifting force produced by the airfoil shape of the ring wing will increase which will further cause the aerial vehicle to pitch into the horizontal flight orientation and allow the aerial vehicle to remain airborne.

In contrast, as discussed herein, when the aerial vehicle is to transition from a horizontal flight orientation to a VTOL orientation, forces from the propulsion mechanisms may cause the aerial vehicle to decrease pitch and reduce horizontal speed. As the pitch of the aerial vehicle decreases, the lift produced by the airfoil shape of the ring wing decreases and the thrust produced by each of the six propulsion mechanisms 202 are utilized to maintain flight of the aerial vehicle 200.

As illustrated in FIG. 2, each of the propulsion mechanisms 202 are positioned in approximately the same plane that is substantially aligned with the ring wing. Likewise, each propulsion mechanism 202 is spaced approximately sixty degrees from each other around the fuselage 210, such that the propulsion mechanisms are positioned at approximately equal distances with respect to one another and around the fuselage 210 of the aerial vehicle 200. For example, the second propulsion mechanism 202-2 and the fifth propulsion mechanism 202-5 may each be positioned along the X axis. The third propulsion mechanism 202-3 may be positioned at approximately sixty degrees from the X axis and the fourth propulsion mechanism 202-4 may be positioned approximately one-hundred and twenty degrees from the X axis. Likewise, the first propulsion mechanism 202-1 and the sixth propulsion mechanism 202-6 may likewise be positioned approximately sixty and one-hundred and twenty degrees from the X axis in the negative direction.

In other implementations, the spacing between the propulsion mechanisms may be different. For example, propulsion mechanisms 202-1, 202-3, and 202-5, which are oriented in the first direction, may each be approximately equally spaced 120 degrees apart and propulsion mechanisms 202-2, 202-4, and 202-6, which are oriented in the second direction, may also be approximately equally spaced 120 degrees apart. However, the spacing between propulsion mechanisms oriented in the first direction and propulsion mechanisms oriented in the second direction may not be equal. For example, the propulsion mechanisms 202-1, 202-3, and 202-5, oriented in the first direction, may be positioned at approximately zero degrees, approximately 120 degrees, and approximately 240 degrees around the perimeter of the aerial vehicle with respect to the X axis, and the propulsion mechanisms 202-2, 202-4, and 202-6, oriented in the second direction, may be positioned at approximately 10 degrees, approximately 130 degrees, and approximately 250 degrees around the perimeter of the aerial vehicle 200 with respect to the X axis.

In other implementations, the propulsion mechanisms may have other alignments. Likewise, in other implementations, there may be fewer or additional propulsion mechanisms. Likewise, in some implementations, the propulsion mechanisms may not all be aligned in the same plane and/or the ring wing may be in a different plane than some or all of the propulsion mechanisms.

While the examples discussed above and illustrated in FIG. 2 discuss rotating the propulsion mechanisms approximately thirty degrees about each respective motor arm and that the ring wing is offset approximately thirty degrees with respect to the fuselage, in other implementations, the orientation of the propulsion mechanisms and/or the ring wing may be greater or less than thirty degrees and the angle of the ring wing may be different than the angle of one or more propulsion mechanisms. In some implementations, if maneuverability of the aerial vehicle when the aerial vehicle is in VTOL orientation is of higher importance, the orientation of the propulsion mechanisms may be higher than thirty degrees. For example, each of the propulsion mechanisms may be oriented approximately forty-five degrees about each respective motor arm, in either the first or second direction. In comparison, if the lifting force of the aerial vehicle when the aerial vehicle is in the VTOL orientation is of higher importance, the orientation of the propulsion mechanisms may be less than thirty degrees. For example, each propulsion mechanism may be oriented approximately ten degrees from a vertical orientation about each respective motor arm.

In some implementations, the orientations of some propulsion mechanisms may be different than other propulsion mechanisms. For example, propulsion mechanisms 202-1, 202-3, and 202-5 may each be oriented approximately fifteen degrees in the first direction and propulsion mechanisms 202-2, 202-4, and 202-6 may be oriented approximately twenty-five degrees in the second direction. In still other examples, pairs of propulsion mechanisms may have different orientations than other pairs of propulsion mechanisms. For example, propulsion mechanisms 202-1 and 202-6 may each be oriented approximately thirty degrees in the first direction and second direction, respectively, toward one another, propulsion mechanisms 202-3 and 202-2 may each be oriented approximately forty-five degrees in the first direction and second direction, respectively, toward one another, and propulsion mechanisms 202-5 and 202-4 may each be oriented approximately forty-five degrees in the first direction and second direction, respectively, toward one another.

As discussed herein, by orienting propulsion mechanisms partially toward one another in pairs, as illustrated, the lateral or horizontal forces generated by the pairs of propulsion mechanisms, when producing the same amount of force, may substantially cancel out such that the sum of the forces from the pair is only in a substantially vertical direction (Z direction), when the aerial vehicle is in the VTOL orientation. Likewise, as discussed below, if one propulsion mechanism of the pair produces a force larger than a second propulsion mechanism, a lateral or horizontal force will result in the X direction and/or the Y direction, when the aerial vehicle is in the VTOL orientation. A horizontal force produced from one or more of the pairs of propulsion mechanisms enables the aerial vehicle to translate in a horizontal direction and/or yaw without altering the pitch of the aerial vehicle, when the aerial vehicle is in the VTOL orientation. Producing lateral forces by multiple pairs of propulsion mechanisms 202 enables the aerial vehicle 200 to operate independently in any of the six degrees of freedom (surge, sway, heave, pitch, yaw, and roll). As a result, the stability and maneuverability of the aerial vehicle 200 is increased.

While the implementations described herein include six arms that extend radially from a central portion of the aerial vehicle and are coupled to the ring wing, in other implementations, there may be fewer or additional arms. For example, the aerial vehicle may include support arms that extend between the motor arms and provide additional support to the aerial vehicle. As another example, not all of the motor arms may extend to and couple with the ring wing.

While the examples discussed herein describe a ring wing having a substantially hexagonal shape, in other implementations, the ring wing may have other shapes. For example, the ring wing may be substantially circular, square, rectangular, pentagonal, octagonal, etc. Further, while the example aerial vehicle 200 discussed herein with respect to FIG. 2 include six propulsion mechanism arms, six propulsion mechanisms, and six propellers, the systems and methods described herein may be implemented on various other types of aerial vehicles, such as aerial vehicles having fewer than six propulsion mechanism arms, motors, and propellers, aerial vehicles having greater than six propulsion mechanism arms, motors, and propellers, and/or aerial vehicles having configurations different from those described herein with respect to FIGs. 1A, 1B, and 2, such as quad-copters, octa-copters, or other configurations.

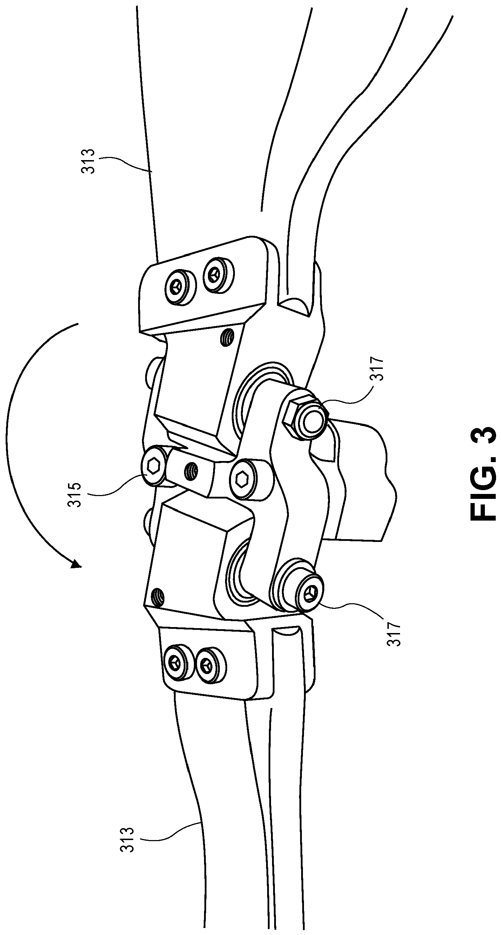

FIG. 3 illustrates a partial perspective view of a propeller including a propeller hub and propeller blades that are passively movably coupled thereto via respective hinges, which are not covered by the appended claims. The propeller hub 315 may be coupled to and rotated by a respective motor to provide thrust to an aerial vehicle. Although FIG. 3 illustrates two propeller blades 313 coupled to propeller hub 315, any other number or arrangement of propeller blades may be coupled to a propeller hub. Further, although FIG. 3 illustrates substantially straight propeller blades 313, propeller blades having various other shapes may also utilized, such as swept propeller blades, or propeller blades having other shapes or sizes.

As shown in FIG. 3, the propeller may include one or more passively movable propeller blades 313 that are movably coupled to a propeller hub 315 via respective hinges 317. In addition, each hinge 317 may be angled relative to a chord of the respective propeller blade 313. For example, each hinge 317 may be angled such that an axis of rotation about the hinge 317 is situated farther from the propeller hub 315 toward the leading edge of the propeller blade 313 and situated closer to the propeller hub 315 toward the trailing edge of the propeller blade 313. The particular angle of a hinge 317 relative to a chord of a respective propeller blade 313 may be determined based on desired changes to geometry of the propeller blade, such as coning angle and/or pitch, responsive to various levels of required thrust, particular advance ratios, expected flight configurations, and/or various other factors related to propeller blade design, such as number of propeller blades, expected rotational rates, expected altitudes, expected air densities, or various other environmental factors.

The passively movable propeller blades 313 and respective hinges 317 may allow the propeller to alter or modify its geometry and/or operational characteristics based at least in part on required thrust, advance ratio, and/or current flight configuration. For example, each propeller blade 313 may rotate upward or downward (or forward or rearward relative to a direction of flight) around an axis of a respective hinge 317. This rotation or movement of the propeller blade 313 may modify a coning angle of the propeller blade 313, as well as a pitch of the propeller blade 313.

Generally, the coning angle of the propeller blade may be the angle between the propeller blade 313 and a propeller plane that is perpendicular to an axis of rotation of the propeller hub 315. In addition, the pitch of the propeller blade may be the angle between a line extending through the leading edge and trailing edge of the propeller blade 313 and a propeller plane that is perpendicular to an axis of rotation of the propeller hub 315.

As shown in FIG. 3, the coning angles of the propeller blades 313 and the pitches of the propeller blades 313 may have an inverse relationship. For example, as the propeller blades 313 rotate upward (or forward) around axes of respective hinges 317 away from the propeller plane, the coning angles of the propeller blades 313 may increase. In addition, as the propeller blades 313 rotate upward (or forward) around axes of respective hinges 317 away from the propeller plane, the pitches of the propeller blades 313 may decrease due to the angles of the axes of respective hinges 317. Likewise, as the propeller blades 313 rotate downward (or rearward) around axes of respective hinges 317 toward the propeller plane, the coning angles of the propeller blades 313 may decrease. In addition, as the propeller blades 313 rotate downward (or rearward) around axes of respective hinges 317 toward the propeller plane, the pitches of the propeller blades 313 may increase due to the angles of the axes of respective hinges 317.

In a VTOL flight configuration, or other high thrust and low advance ratio flight configuration, of an aerial vehicle, the propeller blades 313 may tend to increase their coning angles by rotating upward around axes of respective hinges 317, in order to generate the required high thrust. Concurrently, the propeller blades 313 may also tend to decrease their pitches due to the angles of the axes of respective hinges 317, which decrease in pitches may correspond with the desired low advance ratio. Thus, the propeller blades 313 may passively modify their geometry and/or operational characteristics to improve efficiency in such high thrust and low advance ratio flight configurations.

In a horizontal flight configuration, or other low thrust and high advance ratio flight configuration, of an aerial vehicle, the propeller blades 313 may tend to decrease their coning angles by rotating rearward (relative to a direction of horizontal flight) around axes of respective hinges 317, in order to generate the required low thrust. Concurrently, the propeller blades 313 may also tend to increase their pitches due to the angles of the axes of respective hinges 317, which increase in pitches may correspond with the desired high advance ratio. Thus, the propeller blades 313 may passively modify their geometry and/or operational characteristics to also improve efficiency in such low thrust and high advance ratio flight configurations.

Although FIG. 3 illustrates propeller blades 313 coupled to a propeller hub 315 via respective hinges 317, propeller blades 313 may include respective hinges along their lengths, such that a first portion of a propeller blade may be rigidly or fixedly coupled to and rotate with the propeller hub, and a second portion of the propeller blade that is coupled to the first portion via the respective hinge may rotate with the propeller hub and also passively alter or modify its coning angle and/or pitch relative to the first portion of the propeller blade. A propeller blade may include a plurality of portions that are coupled to each other via respective hinges, e.g., a first portion coupled to a propeller hub via a first hinge, a second portion coupled to the first portion via a second hinge, a third portion coupled to the second portion via a third hinge, etc.

Alternatively or in addition to the respective hinges 317 shown in FIG. 3, propeller blades may be coupled to a propeller hub via respective flexible joints, such as living hinges, sections of elastic or flexible materials, or other bendable or flexible portions. The flexible joints may comprise materials that may elastically deform, rotate, or move to allow propeller blades to alter or modify their geometry and/or operational characteristics based at least in part on required thrust, advance ratio, and/or current flight configuration. The flexible joints may also comprise portions of materials of propeller blades that are designed or configured to bend or flex, e.g., carbon fiber strands that are designed, configured, or oriented to form bendable or flexible portions of propeller blades. In addition, the flexible joints may be angled relative to a chord of a propeller blade, similar to the angle of the hinge and hinge axis as described herein. Further, the particular angle of a flexible joint relative to a chord of a respective propeller blade, as well as a particular level of elasticity or flexibility of a flexible joint, may be determined based on desired changes to geometry of the propeller blade, such as coning angle and/or pitch, responsive to various levels of required thrust, particular advance ratios, expected flight configurations, and/or various other factors related to propeller blade design, such as number of propeller blades, expected rotational rates, expected altitudes, expected air densities, or various other environmental factors. The passively movable propeller blades coupled to a propeller hub via respective flexible joints may modify their coning angles and/or pitches in analogous manner to that described herein with respect to passively movable propeller blades coupled to a propeller hub via respective hinges.

Alternatively or in addition to the respective hinges 317 shown in FIG. 3, and/or propeller blades that may be coupled to a propeller hub via respective flexible joints, propeller blades may include respective flexible joints along their lengths, such as living hinges, sections of elastic or flexible materials, or other bendable or flexible portions. The flexible joints may comprise materials that may elastically deform, rotate, or move to allow propeller blades to alter or modify their geometry and/or operational characteristics based at least in part on required thrust, advance ratio, and/or current flight configuration. The flexible joints may also comprise portions of materials of propeller blades that are designed or configured to bend or flex, e.g., carbon fiber strands that are designed, configured, or oriented to form bendable or flexible portions of propeller blades. In addition, the flexible joints may be angled relative to a chord of a propeller blade, similar to the angle of the hinge and hinge axis as described herein. Further, the particular angle of a flexible joint relative to a chord of a respective propeller blade, as well as a particular level of elasticity or flexibility of a flexible joint, may be determined based on desired changes to geometry of the propeller blade, such as coning angle and/or pitch, responsive to various levels of required thrust, particular advance ratios, expected flight configurations, and/or various other factors related to propeller blade design, such as number of propeller blades, expected rotational rates, expected altitudes, expected air densities, or various other environmental factors. The passively movable propeller blades having respective flexible joints may modify their coning angles and/or pitches in analogous manner to that described herein with respect to passively movable propeller blades having respective hinges. In this manner, a first portion of a propeller blade may be rigidly or fixedly coupled to and rotate with the propeller hub, and a second portion of the propeller blade that is coupled to the first portion via the respective flexible joint may rotate with the propeller hub and also passively alter or modify its coning angle and/or pitch relative to the first portion of the propeller blade. A propeller blade may include a plurality of portions that are coupled to each other via respective flexible joints, e.g., a first portion coupled to a propeller hub via a first flexible joint, a second portion coupled to the first portion via a second flexible j oint, a third portion coupled to the second portion via a third flexible joint, etc.

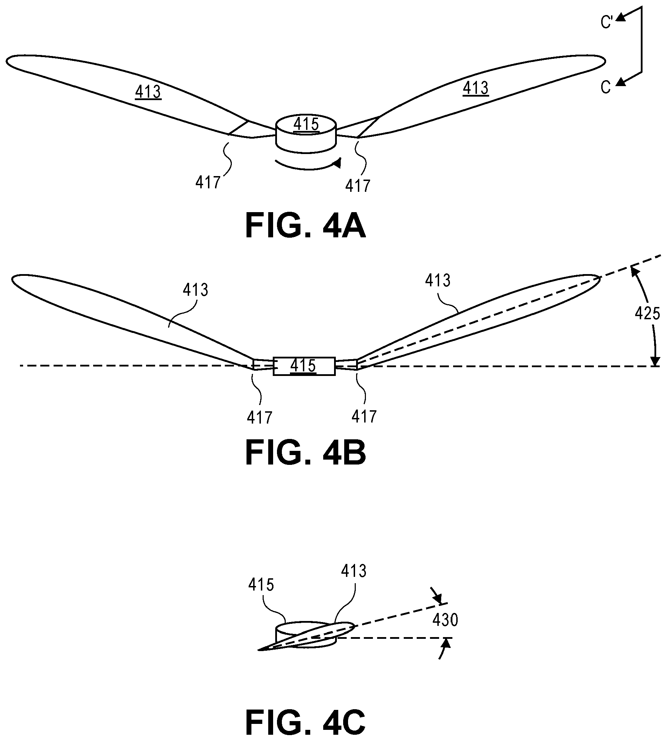

FIGs. 4A-4C illustrate perspective, side, and end views, respectively, of propeller blades 413 that are passively movably coupled to a propeller hub 415 via hinges or flexible joints 417 in a VTOL flight configuration, in accordance with disclosed implementations. The propeller blades 413 shown in FIGs. 4A-4C include hinges or flexible joints 417 along their lengths.

As described herein, in a VTOL flight configuration, or other high thrust and low advance ratio flight configuration, of an aerial vehicle, the propeller blades 413 may tend to increase their coning angles by rotating upward around axes of respective hinges or flexible joints 417, responsive to the required high thrust. Concurrently, the propeller blades 413 may also tend to decrease their pitches due to the angles of the axes of respective hinges or flexible joints 417, which decrease in pitches may correspond with the desired low advance ratio. Thus, the propeller blades 413 may passively modify their geometry and/or operational characteristics to improve efficiency in such high thrust and low advance ratio flight configurations.

As shown in the side view of FIG. 4B, in the VTOL flight configuration, the propeller blades 413 may rotate upward around axes of respective hinges or flexible joints 417, thereby increasing their coning angles 425 relative to a propeller plane, responsive to generating the required high thrust associated with the VTOL flight configuration.

In addition, as shown in the end view of FIG. 4C, as viewed along lines C-C' shown in FIG. 4A, in the VTOL flight configuration, the propeller blades 413 may modify their pitches due to the angles of the axes of respective hinges or flexible joints 417, thereby decreasing their pitches 430 relative to a propeller plane. In this manner, the propeller blades 413 may have reduced pitches that correspond with the desired low advance ratio associated with the VTOL flight configuration.

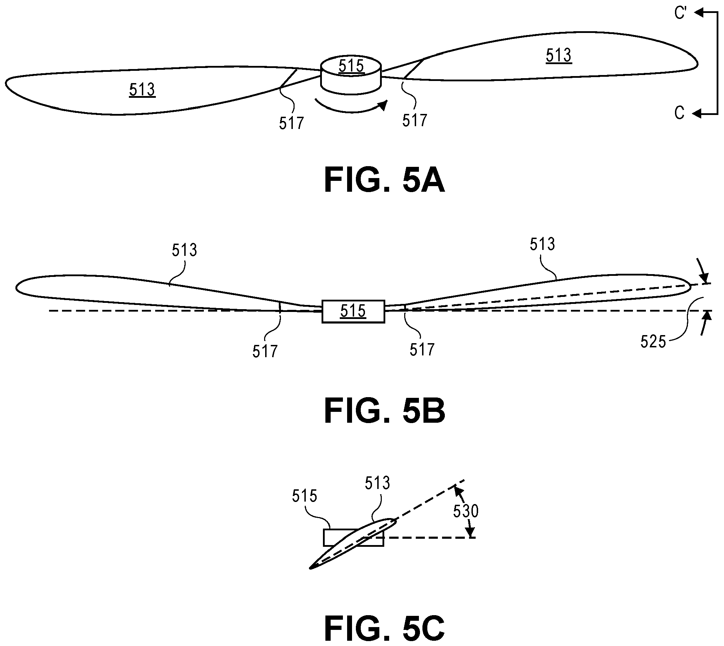

FIGs. 5A-5C illustrate perspective, side, and end views, respectively, of propeller blades 513 that are passively movably coupled to a propeller hub 515 via hinges or flexible joints 517 in a horizontal flight configuration, in accordance with disclosed implementations. The propeller blades 513 shown in FIGs. 5A-5C may include hinges or flexible joints 517 along their lengths.

As described herein, in a horizontal flight configuration, or other low thrust and high advance ratio flight configuration, of an aerial vehicle, the propeller blades 513 may tend to decrease their coning angles by rotating rearward (relative to a direction of horizontal flight) around axes of respective hinges or flexible joints 517, responsive to the required low thrust. Concurrently, the propeller blades 513 may also tend to increase their pitches due to the angles of the axes of respective hinges or flexible joints 517, which increase in pitches may correspond with the desired high advance ratio. Thus, the propeller blades 513 may passively modify their geometry and/or operational characteristics to improve efficiency in such low thrust and high advance ratio flight configurations.

As shown in the side view of FIG. 5B, in the horizontal flight configuration, the propeller blades 513 may rotate rearward (relative to a direction of horizontal flight) around axes of respective hinges or flexible joints 517, thereby decreasing their coning angles 525 relative to a propeller plane, responsive to generating the required low thrust associated with the horizontal flight configuration.

In addition, as shown in the end view of FIG. 5C, as viewed along lines C-C' shown in FIG. 5A, in the horizontal flight configuration, the propeller blades 513 may modify their pitches due to the angles of the axes of respective hinges or flexible joints 517, thereby increasing their pitches 530 relative to a propeller plane. In this manner, the propeller blades 513 may have increased pitches that correspond with the desired high advance ratio associated with the horizontal flight configuration.

Alternatively or in addition to propeller blades coupled to a propeller hub via respective hinges or flexible joints 317, 417, 517 shown in FIGs. 3, 4A-4C, and 5A-5C, and/or propeller blades having respective hinges or flexible joints along their lengths, the passively movable propeller blades may be coupled to a propeller hub via torsionally flexible joints and/or may include torsionally flexible joints or sections along their lengths. Each torsionally flexible joint or section may enable rotation of at least a portion of a respective propeller blade around an axis that is substantially parallel to a span or length of the blade. In this manner, a first portion of a propeller blade may be rigidly or fixedly coupled to and rotate with the propeller hub, and a second portion of the propeller blade that is coupled to the first portion via the respective torsionally flexible joint may rotate with the propeller hub and also passively alter or modify its coning angle and/or pitch relative to the first portion of the propeller blade. A propeller blade may include a plurality of portions that are coupled to each other via respective torsionally flexible joints, e.g., a first portion coupled to a propeller hub via a first torsionally flexible joint, a second portion coupled to the first portion via a second torsionally flexible joint, a third portion coupled to the second portion via a third torsionally flexible joint, etc.

The torsionally flexible joints or sections may comprise materials, such as torsional springs or other twisting or rotating elements, that may elastically deform, rotate, twist, or move to allow propeller blades to alter or modify their geometry and/or operational characteristics based at least in part on required thrust, advance ratio, and/or current flight configuration. The torsionally flexible joints may also comprise portions of materials of propeller blades that are designed or configured to rotate or twist, e.g., carbon fiber strands that are designed, configured, or oriented to form rotatable or twistable portions of propeller blades. In addition, the particular level of torsional elasticity or flexibility of a torsionally flexible joint or section may be determined based on desired changes to geometry of the propeller blade, such as coning angle and/or pitch, responsive to various levels of required thrust, particular advance ratios, expected flight configurations, and/or various other factors related to propeller blade design, such as number of propeller blades, expected rotational rates, expected altitudes, expected air densities, or various other environmental factors. The coning angles and the pitches of the propeller blades having respectively torsionally flexible joints or sections may also have an inverse relationship similar to that described herein with respect to passively movable propeller blades having respective hinges or flexible joints.

Further, in horizontal flight or other low thrust and high advance ratio flight configurations, propeller blades having torsionally flexible joints or sections may operate in a substantially nominal or base configuration having relatively lower coning angles and relatively greater pitches, whereas in VTOL flight or other high thrust and low advance ratio flight configurations, propeller blades having torsionally flexible joints or sections may operate in a substantially elastically deformed, rotated, or twisted configuration having relatively greater coning angles and relatively lower pitches.

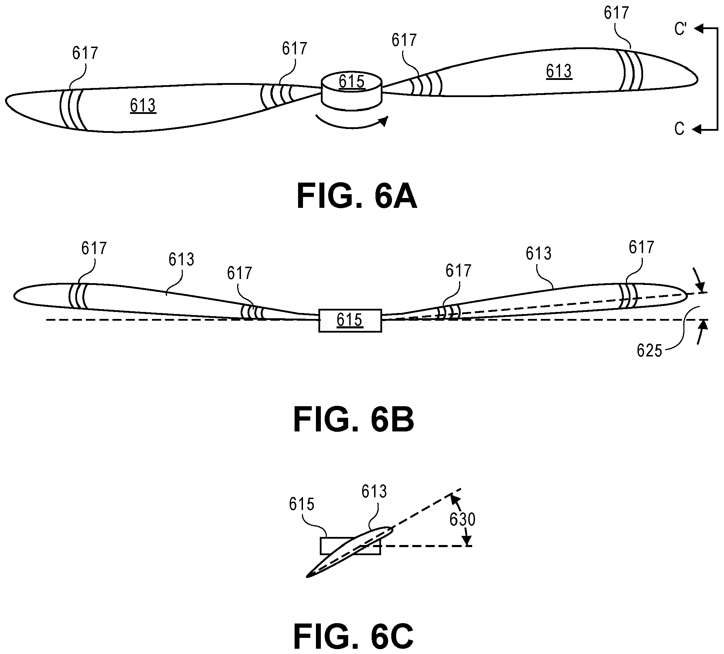

FIGs. 6A-6C illustrate perspective, side, and end views, respectively, of propeller blades 613 that are passively movably coupled to a propeller hub 615 via torsionally flexible joints or sections 617, in accordance with disclosed implementations. The propeller blades 613 shown in FIGs. 6A-6C may include torsionally flexible joints or sections 617 along their lengths.

As described herein, in a VTOL flight configuration, or other high thrust and low advance ratio flight configuration, of an aerial vehicle, the propeller blades 613 may tend to increase their coning angles by rotating upward due to greater bending of a material of the propeller blades, responsive to the required high thrust. Concurrently, the propeller blades 613 may also tend to decrease their pitches due to the torsional flexibility of respective torsionally flexible joints or sections 617 responsive to higher thrust or loads, which decrease in pitches may correspond with the desired low advance ratio. Thus, the propeller blades 613 may passively modify their geometry and/or operational characteristics to improve efficiency in such high thrust and low advance ratio flight configurations.

As shown in the side view of FIG. 6B, in the VTOL flight configuration, the propeller blades 613 may rotate upward due to greater bending of a material of the propeller blades, thereby increasing their coning angles 625 relative to a propeller plane, similar to that shown in FIG. 4B, responsive to generating the required high thrust associated with the VTOL flight configuration.

In addition, as shown in the end view of FIG. 6C, as viewed along lines C-C' shown in FIG. 6A, in the VTOL flight configuration, the propeller blades 613 may modify their pitches due to the torsional flexibility of respective torsionally flexible joints or sections 617 responsive to higher thrusts or loads, thereby decreasing their pitches 630 relative to a propeller plane, similar to that shown in FIG. 4C. In this manner, the propeller blades 613 may have reduced pitches that correspond with the desired low advance ratio associated with the VTOL flight configuration.

Further, as described herein, in a horizontal flight configuration, or other low thrust and high advance ratio flight configuration, of an aerial vehicle, the propeller blades 613 may tend to decrease their coning angles by rotating rearward (relative to a direction of horizontal flight) due to lesser bending of a material of the propeller blades, responsive to the required low thrust. Concurrently, the propeller blades 613 may also tend to increase their pitches due to the torsional flexibility of respective torsionally flexible joints or sections 617 responsive to lower thrust or loads, which increase in pitches may correspond with the desired high advance ratio. Thus, the propeller blades 613 may passively modify their geometry and/or operational characteristics to improve efficiency in such low thrust and high advance ratio flight configurations.

As shown in the side view of FIG. 6B, in the horizontal flight configuration, the propeller blades 613 may rotate rearward (relative to a direction of horizontal flight) due to lesser bending of a material of the propeller blades, thereby decreasing their coning angles 625 relative to a propeller plane, similar to that shown in FIG. 5B, responsive to generating the required low thrust associated with the horizontal flight configuration.

In addition, as shown in the end view of FIG. 6C, as viewed along lines C-C' shown in FIG. 6A, in the horizontal flight configuration, the propeller blades 613 may modify their pitches due to the torsional flexibility of respective torsionally flexible joints or sections 617 responsive to lower thrusts or loads, thereby increasing their pitches 630 relative to a propeller plane, similar to that shown in FIG. 5C. In this manner, the propeller blades 613 may have increased pitches that correspond with the desired high advance ratio associated with the horizontal flight configuration.

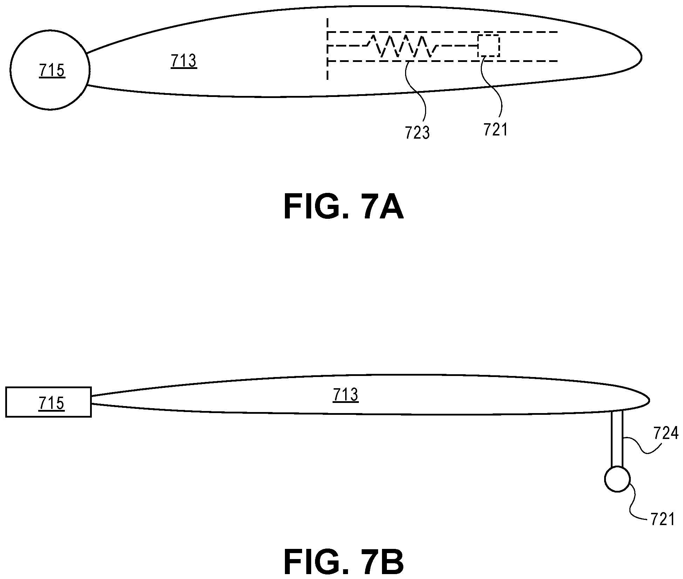

FIGs. 7A and 7B illustrate various views of propeller blades 713 having tip weights 721, in accordance with disclosed implementations.

As shown in FIG. 7A, a propeller blade 713 coupled to a propeller hub 715 may also include one or more internal tip weights 721 to affect or modify one or more coning angles of the propeller blade 713 in various flight configurations. In the example shown in FIG. 7A, the tip weight 721 may be internal to the propeller blade 713 and elastically, movably coupled within the propeller blade 713 via a spring or other bias element 723 (and potentially in combination with a damping element). In this manner, responsive to the propeller blade 713 rotating at a relatively higher rotational rate, the tip weight 721 may move radially outward toward a tip of the propeller blade 713 away from the propeller hub 715. Likewise, responsive to the propeller blade 713 rotating at a relatively lower rotational rate, the tip weight 721 may move radially inward toward the propeller hub 715 away from a tip of the propeller blade 713.

Generally, as the tip weight 721 moves closer to the propeller hub 715, the coning angle of the propeller blade 713 may become correspondingly larger. Conversely, as the tip weight 721 moves closer to the tip of the propeller blade 713, the coning angle of the propeller blade 713 may become correspondingly smaller. Various numbers, combinations, or arrangements of one or more internal tip weights may be used to define or affect one or more coning angles of the propeller blade 713 in various flight configurations, which may be different from the particular example shown in FIG. 7A.

Further, although FIG. 7A shows a passively movable tip weight 721, one or more tip weights may be actuatable using various types of actuators (not shown), such as motors, solenoids, servos, linear actuators, rotary actuators, geared actuators, or various other types of actuators, in order to actively define or affect one or more coning angles of the propeller blade 713 in various flight configurations.

As shown in FIG. 7B, a propeller blade 713 coupled to a propeller hub 715 may also include one or more external tip weights 721 to affect or modify one or more coning angles of the propeller blade 713 in various flight configurations. In the example shown in FIG. 7B, the tip weight 721 may be cantilevered or otherwise coupled to the propeller blade 713 outside the propeller plane via a tip weight arm 724, e.g., cantilevered below the propeller plane. In this manner, responsive to the propeller blade 713 rotating at a relatively higher rotational rate, the tip weight 721 may cause a relatively greater increase or change in the coning angle of the propeller blade 713. Likewise, responsive to the propeller blade 713 rotating at a relatively lower rotational rate, the tip weight 721 may cause a relatively smaller increase or change in the coning angle of the propeller blade 713.

Generally, as the propeller blade 713 rotates at a relatively higher rotational rate, the rotational inertia of the cantilevered tip weight 721 may cause a relatively greater increase or change in the coning angle of the propeller blade 713. Conversely, as the propeller blade 713 rotates at a relatively lower rotational rate, the rotational inertia of the cantilevered tip weight 721 may cause a relatively smaller increase or change in the coning angle of the propeller blade 713. Various numbers, combinations, or arrangements of one or more external tip weights may be used to define or affect one or more coning angles of the propeller blade 713 in various flight configurations, which may be different from the particular example shown in FIG. 7B.

Further, although FIG. 7B shows a fixed external tip weight 721, one or more tip weights may be passively movable, e.g., rotatable, extendible, or retractable using bias elements, torsional bias elements, dampening elements, or other types of passively movable elements. One or more tip weights may be actuatable, e.g., rotated, extended, or retracted relative to a tip weight arm 724, using various types of actuators (not shown), such as motors, solenoids, servos, linear actuators, rotary actuators, geared actuators, or various other types of actuators, in order to actively define or affect one or more coning angles of the propeller blade 713 in various flight configurations.

Although FIGs. 3, 4A-4C, 5A-5C, 6A-6C, 7A, and 7B show particular numbers or arrangements of propeller blades around a propeller hub, any other numbers or arrangements of propeller blades may be utilized. In addition, only a subset (or less than all) of propeller blades and/or propellers may comprise passively movable propeller blades including respective hinges, flexible joints, or torsionally flexible joints as described herein. Moreover, although various examples and associated features are described herein individually with respect to FIGs. 3, 4A-4C, 5A-5C, 6A-6C, 7A, and 7B, various combinations of the examples and associated features described herein may also be utilized to achieve operational efficiencies associated with passive variable pitch propellers in various flight configurations as described herein.

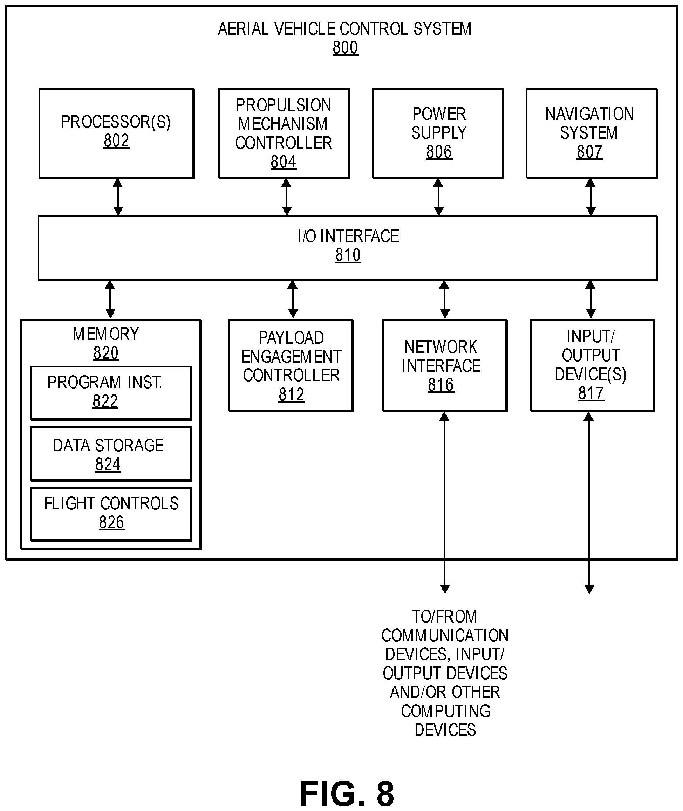

FIG. 8 is a block diagram illustrating various components of an example aerial vehicle control system 800, in accordance with disclosed implementations.

In various examples, the block diagram may be illustrative of one or more aspects of the aerial vehicle control system 800 that may be used to implement the various systems and methods discussed herein and/or to control operation of an aerial vehicle discussed herein. In the illustrated implementation, the aerial vehicle control system 800 includes one or more processors 802, coupled to a memory, e.g., a non-transitory computer readable storage medium 820, via an input/output (I/O) interface 810. The aerial vehicle control system 800 also includes propulsion mechanism controllers 804, such as electronic speed controls (ESCs) or motor controllers, power modules 806 and/or a navigation system 807. The aerial vehicle control system 800 further includes a payload engagement controller 812, a network interface 816, and one or more input/output devices 817.

In various implementations, the aerial vehicle control system 800 may be a uniprocessor system including one processor 802, or a multiprocessor system including several processors 802 (e.g., two, four, eight, or another suitable number). The processor(s) 802 may be any suitable processor capable of executing instructions. For example, in various implementations, the processor(s) 802 may be general-purpose or embedded processors implementing any of a variety of instruction set architectures (ISAs), such as the x86, PowerPC, SPARC, or MIPS ISAs, or any other suitable ISA. In multiprocessor systems, each processor(s) 802 may commonly, but not necessarily, implement the same ISA.

The non-transitory computer readable storage medium 820 may be configured to store executable instructions, data, flight paths, flight control parameters, center of gravity information, and/or data items accessible by the processor(s) 802. In various implementations, the non-transitory computer readable storage medium 820 may be implemented using any suitable memory technology, such as static random access memory (SRAM), synchronous dynamic RAM (SDRAM), nonvolatile/Flash-type memory, or any other type of memory. In the illustrated implementation, program instructions and data implementing desired functions, such as those described herein, are shown stored within the non-transitory computer readable storage medium 820 as program instructions 822, data storage 824 and flight controls 826, respectively. In other implementations, program instructions, data, and/or flight controls may be received, sent, or stored upon different types of computer-accessible media, such as non-transitory media, or on similar media separate from the non-transitory computer readable storage medium 820 or the aerial vehicle control system 800. Generally speaking, a non-transitory, computer readable storage medium may include storage media or memory media such as magnetic or optical media, e.g., disk or CD/DVD-ROM, coupled to the aerial vehicle control system 800 via the I/O interface 810. Program instructions and data stored via a non-transitory computer readable medium may be transmitted by transmission media or signals such as electrical, electromagnetic, or digital signals, which may be conveyed via a communication medium such as a network and/or a wireless link, such as may be implemented via the network interface 816.

In one implementation, the I/O interface 810 may be configured to coordinate I/O traffic between the processor(s) 802, the non-transitory computer readable storage medium 820, and any peripheral devices, the network interface or other peripheral interfaces, such as input/output devices 817. In some implementations, the I/O interface 810 may perform any necessary protocol, timing or other data transformations to convert data signals from one component (e.g., non-transitory computer readable storage medium 820) into a format suitable for use by another component (e.g., processor(s) 802). In some implementations, the I/O interface 810 may include support for devices attached through various types of peripheral buses, such as a variant of the Peripheral Component Interconnect (PCI) bus standard or the Universal Serial Bus (USB) standard, for example. In some implementations, the function of the I/O interface 810 may be split into two or more separate components, such as a north bridge and a south bridge, for example. Also, in some implementations, some or all of the functionality of the I/O interface 810, such as an interface to the non-transitory computer readable storage medium 820, may be incorporated directly into the processor(s) 802.

The propulsion mechanism controllers 804 may communicate with the navigation system 807 and adjust the rotational speed, position, orientation, or other parameters of each propulsion mechanism to implement one or more aerial vehicle flight plans or operations, to implement one or more vehicle flight configurations, to stabilize the aerial vehicle, and/or to perform one or more maneuvers and guide the aerial vehicle along a flight path and/or to a destination location.

The navigation system 807 may include a global positioning system (GPS), indoor positioning system (IPS), or other similar system and/or sensors that can be used to navigate the aerial vehicle to and/or from a location. The payload engagement controller 812 communicates with the actuator(s) or motor(s) (e.g., a servo motor) used to engage and/or disengage items.

The network interface 816 may be configured to allow data to be exchanged between the aerial vehicle control system 800, other devices attached to a network, such as other computer systems (e.g., remote computing resources), and/or with aerial vehicle control systems of other aerial vehicles. For example, the network interface 816 may enable wireless communication between the aerial vehicle and an aerial vehicle control system that is implemented on one or more remote computing resources. For wireless communication, an antenna of the aerial vehicle or other communication components may be utilized. As another example, the network interface 816 may enable wireless communication between numerous aerial vehicles. In various implementations, the network interface 816 may support communication via wireless general data networks, such as a Wi-Fi network. For example, the network interface 816 may support communication via telecommunications networks, such as cellular communication networks, satellite networks, and the like.

Input/output devices 817 may, in some implementations, include one or more displays, imaging devices, thermal sensors, infrared sensors, time of flight sensors, accelerometers, pressure sensors, weather sensors, various other sensors described herein, etc. Multiple input/output devices 817 may be present and controlled by the aerial vehicle control system 800. One or more of these sensors may be utilized to control functions or operations related to horizontal flight configurations, VTOL flight configurations, other flight configurations, transitions between various flight configurations, and/or any other operations or functions described herein.

As shown in FIG. 8, the memory may include program instructions 822, which may be configured to implement the example routines and/or sub-routines described herein. The data storage 824 may include various data stores for maintaining data items that may be provided for operations and navigation of an aerial vehicle, etc. In various implementations, the parameter values and other data illustrated herein as being included in one or more data stores may be combined with other information not described or may be partitioned differently into more, fewer, or different data structures. In some implementations, data stores may be physically located in one memory or may be distributed among two or more memories.

Those skilled in the art will appreciate that the aerial vehicle control system 800 is merely illustrative and is not intended to limit the scope of the present disclosure. In particular, the computing system and devices may include any combination of hardware or software that can perform the indicated functions. The aerial vehicle control system 800 may also be connected to other devices that are not illustrated, or instead may operate as a stand-alone system. In addition, the functionality provided by the illustrated components may, in some implementations, be combined in fewer components or distributed in additional components. Similarly, in some implementations, the functionality of some of the illustrated components may not be provided and/or other additional functionality may be available.

Those skilled in the art will also appreciate that, while various items are illustrated as being stored in memory or storage while being used, these items or portions of them may be transferred between memory and other storage devices for purposes of memory management and data integrity. Alternatively, in other implementations, some or all of the software components may execute in memory on another device and communicate with the illustrated aerial vehicle control system 800. Some or all of the system components or data structures may also be stored (e.g., as instructions or structured data) on a non-transitory, computer-accessible medium or a portable article to be read by an appropriate drive, various examples of which are described herein. In some implementations, instructions stored on a computer-accessible medium separate from the aerial vehicle control system 800 may be transmitted to the aerial vehicle control system 800 via transmission media or signals such as electrical, electromagnetic, or digital signals, conveyed via a communication medium such as a wireless link. Various implementations may further include receiving, sending, or storing instructions and/or data implemented in accordance with the foregoing description upon a computer-accessible medium. Accordingly, the techniques described herein may be practiced with other aerial vehicle control system configurations.

The above aspects of the present disclosure are meant to be illustrative. They were chosen to explain the principles and application of the disclosure and are not intended to be exhaustive or to limit the disclosure. Many modifications and variations of the disclosed aspects may be apparent to those of skill in the art. herein.

While the above examples have been described with respect to aerial vehicles, the disclosed implementations may also be used for other forms of vehicles, including, but not limited to, ground based vehicles and water based vehicles.

Aspects of the disclosed system may be implemented as a computer method or as an article of manufacture such as a memory device or non-transitory computer readable storage medium. The computer readable storage medium may be readable by a computer and may comprise instructions for causing a computer or other device to perform processes described in the present disclosure. The computer readable storage media may be implemented by a volatile computer memory, non-volatile computer memory, hard drive, solid-state memory, flash drive, removable disk and/or other media. In addition, components of one or more of the modules and engines may be implemented in firmware or hardware.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

Language of degree used herein, such as the terms "about," "approximately," "generally," "nearly" or "substantially" as used herein, represent a value, amount, or characteristic close to the stated value, amount, or characteristic that still performs a desired function or achieves a desired result. For example, the terms "about," "approximately," "generally," "nearly" or "substantially" may refer to an amount that is within less than 10% of, within less than 5% of, within less than 1% of, within less than 0.1% of, and within less than 0.01% of the stated amount.

As used throughout this application, the word "may" is used in a permissive sense (i.e., meaning having the potential to), rather than the mandatory sense (i.e., meaning must). Similarly, the words "include," "including," and "includes" mean including, but not limited to. Additionally, as used herein, the term "coupled" may refer to two or more components connected together, whether that connection is permanent (e.g., welded) or temporary (e.g., bolted), direct or indirect (e.g., through an intermediary), mechanical, chemical, optical, or electrical. Furthermore, as used herein, "horizontal" flight refers to flight traveling in a direction substantially parallel to the ground (e.g., sea level), and "vertical" flight refers to flight traveling substantially radially outward from or inward toward the earth's center. It should be understood by those having ordinary skill that trajectories may include components of both "horizontal" and "vertical" flight vectors.

## Claims

1. A propeller (104), comprising:
a hub (415, 515, 615, 715); and
a blade (413, 513, 613, 713) coupled to and rotated by the hub, the blade comprising at least one passively movable portion, wherein the at least one passively movable portion of the blade is at least one of:
passively movably coupled to the hub via a flexible joint (417, 517, 617); or
passively movably coupled to a second portion of the blade via a flexible joint (417, 517, 617), the second portion of the blade being coupled to the hub;
wherein the flexible joint comprises at least one of a living hinge, a section of flexible material, and carbon fibre strands configured to flex;
wherein the blade is configured to move between at least a first configuration and a second configuration, the first configuration comprising a first geometry of the blade, and the second configuration comprising a second geometry of the blade; and
wherein the first geometry is different than the second geometry.

2. The propeller of claim 1 wherein the blade in the first configuration generates a first thrust, and the blade in the second configuration generates a second thrust; wherein the first thrust is greater than the second thrust.

3. The propeller of claim 1 or claim 2, wherein the blade in the first configuration is associated with a first advance ratio;
wherein the blade in the second configuration is associated with a second advance ratio; and
wherein the first advance ratio is less than the second advance ratio.

4. The propeller of any one of claims 1, 2 or 3, wherein the first geometry comprises a first coning angle and a first pitch of the blade;
wherein the second geometry comprises a second coning angle and a second pitch of the blade;
wherein the first pitch is less than the second pitch; and
wherein the first coning angle is greater than the second coning angle.

5. The propeller of any one of claims 1 to 4, wherein the flexible joint is angled relative to a chord of the blade.

6. The propeller of any one of claims 1 to 4, wherein the flexible joint is torsionally flexible and has an axis substantially parallel to a span of the blade.

7. The propeller of any one of claims 1 to 6, further comprising:
a tip weight (721) associated with the blade and configured to modify at least one of the first geometry or the second geometry of the blade.

8. The propeller of claim 7, wherein the tip weight is configured to move radially outward along the span of the blade to reduce a coning angle of the at least one of the first geometry or the second geometry; and
wherein the tip weight is configured to move radially inward along the span of the blade to increase a coning angle of the at least one of the first geometry or the second geometry.

9. The propeller of claim 7, wherein the tip weight is coupled to the blade outside a rotational plane of the blade.

10. The propeller of claim 7, wherein the tip weight is configured to rotate relative to the blade to modify a coning angle of the at least one of the first geometry or the second geometry.

11. An aerial vehicle (100), comprising:
a frame (103);
a plurality of motors coupled to the frame; and
a plurality of propellers (104) as defined in any preceding claim, each of the plurality of propellers coupled to and rotated by a respective motor.

12. . The aerial vehicle of claim 11,
wherein the first configuration is associated with a VTOL (vertical takeoff and landing) flight configuration of the aerial vehicle; and
wherein the second configuration is associated with a horizontal flight configuration of the aerial vehicle.

## Patentansprüche

1. Propeller (104), umfassend:
eine Nabe (415, 515, 615, 715); und
ein Blatt (413, 513, 613, 713), das mit der Nabe gekoppelt ist und durch diese gedreht wird, wobei das Blatt mindestens einen passiv beweglichen Abschnitt umfasst, wobei der mindestens eine passiv bewegliche Abschnitt des Blattes mindestens eines von Folgendem ist:
über ein flexibles Gelenk (417, 517, 617) passiv beweglich mit der Nabe gekoppelt; oder
über ein flexibles Gelenk (417, 517, 617) passiv beweglich mit einem zweiten Abschnitt des Blattes gekoppelt, wobei der zweite Abschnitt des Blattes mit der Nabe gekoppelt ist;
wobei das flexible Gelenk mindestens eines von einem Filmscharnier, einem Bereich aus flexiblem Material und Kohlenstofffasersträngen, die dazu ausgelegt sind, sich zu biegen, umfasst;
wobei das Blatt dazu ausgelegt ist, sich zwischen mindestens einer ersten Auslegung und einer zweiten Auslegung zu bewegen, wobei die erste Auslegung eine erste Geometrie des Blattes umfasst und die zweite Auslegung eine zweite Geometrie des Blattes umfasst; und
wobei sich die erste Geometrie von der zweiten Geometrie unterscheidet.

2. Propeller nach Anspruch 1, wobei das Blatt in der ersten Auslegung einen ersten Schub erzeugt und das Blatt in der zweiten Auslegung einen zweiten Schub erzeugt; wobei der erste Schub größer als der zweite Schub ist.

3. Propeller nach Anspruch 1 oder Anspruch 2, wobei das Blatt in der ersten Auslegung mit einem ersten Fortschrittsgrad assoziiert ist;
wobei das Blatt in der zweiten Auslegung mit einem zweiten Fortschrittsgrad assoziiert ist; und
wobei der erste Fortschrittsgrad kleiner als der zweite Fortschrittsgrad ist.

4. Propeller nach einem der Ansprüche 1, 2 oder 3, wobei die erste Geometrie einen ersten Konuswinkel und eine erste Steigung des Blattes umfasst;
wobei die zweite Geometrie einen zweiten Konuswinkel und eine zweite Steigung des Blattes umfasst;
wobei die erste Steigung kleiner als die zweite Steigung ist; und
wobei der erste Konuswinkel größer als der zweite Konuswinkel ist.

5. Propeller nach einem der Ansprüche 1 bis 4, wobei das flexible Gelenk relativ zu einer Sehne des Blattes abgewinkelt ist.

6. Propeller nach einem der Ansprüche 1 bis 4, wobei das flexible Gelenk torsionsflexibel ist und eine Achse im Wesentlichen parallel zu einer Spannweite des Blattes aufweist.

7. Propeller nach einem der Ansprüche 1 bis 6, ferner umfassend:
ein Spitzengewicht (721), das mit dem Blatt assoziiert und dazu ausgelegt ist, mindestens eine der ersten Geometrie oder der zweiten Geometrie des Blattes zu verändern.

8. Propeller nach Anspruch 7, wobei das Spitzengewicht dazu ausgelegt ist, sich entlang der Spannweite des Blattes radial nach außen zu bewegen, um einen Konuswinkel der mindestens einen der ersten Geometrie oder der zweiten Geometrie zu verringern; und
wobei das Spitzengewicht dazu ausgelegt ist, sich entlang der Spannweite des Blattes radial nach innen zu bewegen, um einen Konuswinkel der mindestens einen der ersten Geometrie oder der zweiten Geometrie zu erhöhen.

9. Propeller nach Anspruch 7, wobei das Spitzengewicht außerhalb einer Rotationsebene des Blattes mit dem Blatt gekoppelt ist.

10. Propeller nach Anspruch 7, wobei das Spitzengewicht dazu ausgelegt ist, sich relativ zu dem Blatt zu drehen, um einen Konuswinkel der mindestens einen der ersten Geometrie oder der zweiten Geometrie zu verändern.

11. Luftfahrzeug (100), umfassend:
einen Rahmen (103);
eine Mehrzahl von mit dem Rahmen gekoppelten Motoren; und
eine Mehrzahl von Propellern (104) wie nach einem der vorhergehenden Ansprüche definiert, wobei jeder der Mehrzahl von Propellern mit einem jeweiligen Motor gekoppelt ist und durch diesen gedreht wird.

12. Luftfahrzeug nach Anspruch 11, wobei die erste Auslegung mit einer VTOL- (Vertical Takeoff and Landing, Senkrechtstart- und -lande-) Flugauslegung des Luftfahrzeugs assoziiert ist; und
wobei die zweite Auslegung mit einer horizontalen Flugauslegung des Luftfahrzeugs assoziiert ist.

## Revendications

1. Hélices (104), comprenant :
un moyeu (415, 515, 615, 715) ; et
une lame (413, 513, 613, 713) accouplée au moyeu et entraînée en rotation par celui-ci, la lame comprenant au moins une partie à mobilité passive, l'au moins une partie à mobilité passive de la lame étant au moins :
accouplée en mobile passive au moyeu par l'intermédiaire d'une articulation flexible (417, 517, 617) ; ou
accouplée en mobile passive à une seconde partie de la lame par l'intermédiaire d'une articulation flexible (417, 517, 617), la seconde partie de la lame étant accouplée au moyeu ;
l'articulation flexible comprenant une charnière mobile, une section de matériau flexible et/ou des brins de fibre de carbone conçus pour fléchir ;
la lame étant conçue pour se déplacer entre au moins une première configuration et une seconde configuration, la première configuration comprenant une première géométrie de la lame, et la seconde configuration comprenant une seconde géométrie de la lame ; et
la première géométrie étant différente de la seconde géométrie.

2. Hélice selon la revendication 1, la lame dans la première configuration générant une première poussée, et la lame dans la seconde configuration générant une seconde poussée, la première poussée étant supérieure à la seconde poussée.

3. Hélice selon la revendication 1 ou la revendication 2, la lame dans la première configuration étant associée à un premier rapport d'avance ;
la lame dans la seconde configuration étant associée à un second rapport d'avance ; et
le premier rapport d'avance étant inférieur au second rapport d'avance.

4. Hélice selon l'une quelconque des revendications 1, 2 ou 3, la première géométrie comprenant un premier angle de conicité et un premier pas de la lame ;
la seconde géométrie comprenant un second angle de conicité et un second pas de la lame ;
le premier pas étant inférieur au second pas ; et
le premier angle de conicité étant supérieur au second angle de conicité.

5. Hélice selon l'une quelconque des revendications 1 à 4, l'articulation flexible étant inclinée par rapport à une corde de la lame.

6. Hélice selon l'une quelconque des revendications 1 à 4, l'articulation flexible étant flexible en torsion et ayant un axe sensiblement parallèle à l'envergure de la lame.

7. Hélice selon l'une quelconque des revendications 1 à 6, comprenant en outre :
une masse de pointe (721) associée à la lame et conçue pour modifier au moins l'une de la première géométrie ou de la seconde géométrie de la lame.

8. Hélice selon la revendication 7, la masse de pointe étant conçue pour se déplacer radialement vers l'extérieur le long de l'envergure de la lame afin de réduire l'angle de conicité de la première géométrie et/ou de la seconde géométrie ; et
la masse de pointe étant conçue pour se déplacer radialement vers l'intérieur le long de l'envergure de la lame afin d'augmenter l'angle de conicité de la première géométrie et/ou de la seconde géométrie.

9. Hélice selon la revendication 7, la masse de pointe étant accouplée à la lame à l'extérieur d'un plan de rotation de la lame.

10. Hélice selon la revendication 7, la masse de pointe étant conçue pour tourner par rapport à la lame afin de modifier l'angle de conicité de la première géométrie et/ou de la seconde géométrie.

11. Véhicule aérien (100), comprenant :
un châssis (103) ;
une pluralité de moteurs accouplés au châssis ; et
une pluralité d'hélices (104) selon l'une quelconque des revendications précédentes, chacune de la pluralité d'hélices étant accouplée à un moteur respectif et entraînée en rotation par celui-ci.

12. Véhicule aérien selon la revendication 11, la première configuration étant associée à une configuration de vol VTOL (décollage et atterrissage verticaux) du véhicule aérien ; et
la seconde configuration étant associée à une configuration de vol horizontal du véhicule aérien.
